(19) Europäisches Patentamt
European Patent Office
Office européen des brevets

(11) Numéro de publication: **0 275 801 B1**

# (12) FASCICULE DE BREVET EUROPEEN

(45) Date de publication de fascicule du brevet: **19.06.91**

(51) Int. Cl.⁵: **B32B 27/36**, C08G 63/68

(21) Numéro de dépôt: **87420335.9**

(22) Date de dépôt: **14.12.87**

## (54) Procédé d'obtention de films polyester composites épais à adhérence améliorée et nouveaux films composites.

(30) Priorité: **23.12.86 FR 8618230**

(43) Date de publication de la demande:
**27.07.88 Bulletin 88/30**

(45) Mention de la délivrance du brevet:
**19.06.91 Bulletin 91/25**

(84) Etats contractants désignés:
**BE DE GB IT LU NL**

(56) Documents cités:

**PATENT ABSTRACTS OF JAPAN, vol. 4, no. 19 (C-73), 16 février 1980, page 1 C 73; & JP-A-54 153 883 (TOYO BOSEKI K.K.) 12-04-79, & JAPANESE PATENTS REPORT, vol. 86, no. 23, "examined" 29 mai - 4 juin 1986, édité 4 juillet 1986, section CH: Chemical J8-A, page 2, Derwent Publications LTD, Londres, GB; & JP-B-86 021 830 (TOYOBO K.K.) 29-05-1986**

(73) Titulaire: **RHONE-POULENC FILMS
25, quai Paul Doumer
F-92408 Courbevoie(FR)**

(72) Inventeur: **Grosjean, Pierre
14, rue Alexandre Berthier
F-69110 Sainte-Foy-Les-Lyon(FR)**

(74) Mandataire: **Rioufrays, Roger et al
RHONE-POULENC INTERSERVICES Service
Brevets Chimie Centre de Recherches des
Carrières B.P. 62
F-69192 Saint-Fons Cédex(FR)**

EP 0 275 801 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

Le présente invention a pour objet un procédé d'obtention de films polyester composites épais orientés, à adhérence améliorée, vis-à-vis de revêtements finals d'application variés, les nouveaux films composites ainsi obtenus et les films à revêtement final d'application qui en dérivent.

Au sens de la présente invention, on entend par l'expression "films polyester épais", des films d'épaisseur supérieure à 40 micromètres. On sait que selon leur épaisseur, les films polyester trouvent des applications différentes. Ainsi les films dits minces, d'épaisseur inférieure à 40 micromètres, sont utilisés comme supports de bandes magnétiques destinées à l'enregistrement d'informations diverses (images, sons, données informatiques) ou comme matériaux d'emballages. De leur côté, les films dits épais constituent des supports recherchés dans des applications telles que les arts graphiques, les supports de montage, les films masqués ou les films pour rétroprojection. Le plus souvent ces films reçoivent un revêtement d'application permettant leur utilisation. Ainsi par exemple, on dépose sur les films minces des revêtements tels que une couche magnétique, une impression par une encre, un revêtement métallique, un revêtement photosensible, un revêtement destiné à en modifier la perméabilité aux gaz et/ou à la vapeur d'eau. De leur côté les films épais sont pourvus d'un revêtement de matage destiné au dessin, d'un revêtement diazoïque par exemple. Par la suite, ces revêtements seront désignés par l'expression "revêtement final d'application".

On sait encore que, par nature, l'accrochage des revêtements finals d'application sur la surface des films polyester n'est pas aisée. En effet, les films polyesters présentent une surface relativement lisse et ont une réactivité chimique limitée et une très faible sensibilité aux solvants. Il est donc le plus souvent nécessaire de mettre d'abord en oeuvre un revêtement "primaire d'adhérence", - permettant l'ancrage des couches d'emploi - selon des formules chimiques plus ou moins complexes. De façon générale, ce primaire d'adhérence (ou couche d'ancrage) est mis en place par le transformateur. Il est donc facile pour ce dernier d'adapter la nature du primaire à l'application faite ultérieurement.

Les producteurs de films ont cherché à modifier eux-mêmes la surface des films par divers moyens. A cet effet on a proposé l'emploi comme primaire d'adhérence de polymères de nature variée. Une classe particulièrement intéressante de polymères utilisés à ce titre est constituée par des copolyesters présentant une pluralité de groupes hydrophiles et notamment de groupes hydroxysulfonyles ou leurs sels métalliques. Le dépôt de primaires d'adhérence de ce type peut être réalisé soit par enduction du film support à l'aide d'une dispersion ou d'une solution aqueuse (cf. brevets français n° 1.401.581 et 1.602.002; brevet américain 4.476.189 ; brevet européen n° 78 559), soit par coextrusion ou laminage (cf. demandes de brevets japonais publiés sous les n° 50/135 086 et n° 79/153 883). Le dépôt d'un primaire d'adhérence du type copolyester à groupes hydroxysulfonyles ou leurs sels métalliques par enduction implique le recours à des copolyesters à teneurs élevées en motifs récurrents à groupes hydroxysulfonyles ou leurs sels métalliques afin de rendre possible la dispersion ou la dissolution du copolyester sulfoné dans l'eau. Le procédé d'enduction manque de souplesse puisqu'il restreint la gamme des copolyesters sulfonés utilisables à ceux à teneur élevée en motifs récurrents à groupes hydroxysulfonyles ou leurs sels métalliques. Par ailleurs, selon leur composition, de tels copolyesters sulfonés peuvent présenter de basses températures de collage qui rendent les films composites difficiles à manipuler ou à mettre en oeuvre.

La coextrusion est un procédé avantageux de mise en place d'un revêtement primaire d'adhérence. Dans la demande de brevet japonais publiée sous le n° 79/153.883, on a proposé d'améliorer l'imprimabilité et l'adhérence aux revêtements métalliques des films minces en polyester cristallin ou semi-cristallin par dépôt par coextrusion d'une couche d'ancrage à base d'un copolyester sulfoné. A cette fin, on fait appel à des copolyesters comportant de 0,5 à 50 % en moles et de préférence de 1 à 20 % en moles de motifs récurrents à groupes hydroxysulfonyles ou leurs sels métalliques par rapport aux motifs récurrents de même nature. Les copolyesters mis en oeuvre sont plus particulièrement des polycondensats comportant une pluralité de motifs récurrents téréphtalates et sulfo-5 isophtalates. Il a été constaté que l'amélioration de l'adhérence des films polyester cristallin ou semi-cristallin à leurs revêtements finals d'application répond à des exigences différentes selon leur épaisseur. En général, les films épais requièrent, en raison de la nature de leurs revêtements finals, des copolyesters sulfonés à teneur plus élevée en motifs récurrents à groupes hydroxysulfonyles ou leurs sels métalliques que les films minces ; en général les copolyesters sulfonés utilisés pour les films épais doivent comporter plus de 3 % en moles de motifs récurrents sulfonés par rapport aux motifs récurrents de même nature. Cependant la coextrusion s'avère mal adaptée industriellement à l'obtention de films polyester composites orientés comportant, sur au moins une de leur face, un revêtement primaire d'adhérence à base d'un copolyester sulfoné à teneur élevée en motifs récurrents sulfonés. Ainsi, on a constaté que des copolyesters sulfonés du type téréphtalate/sulfo-5 isophtalate d'éthylèneglycol à teneur élevée en motifs sulfo-5 isophtalate, par exemple supérieure ou égale à 10 % en

moles se prêtent mal à la formation de films composites par coextrusion. Leur utilisation implique un séchage long et onéreux en raison de leur hygroscopicité ; un séchage insuffisant perturbe le déroulement du procédé de coextrusion et conduit à des films de mauvaise qualité. En outre, les propriétés rhéologiques des copolyesters sulfonés sont fortement modifiées par la présence de motifs récurrents à groupes hydroxysulfonyles ou leurs sels métalliques et décalées par rapport à celles du polyester utilisé pour obtenir le film support. Ce décalage dans les propriétés rhéologiques des deux polycondensats complique, voire même rend impossible l'obtention d'un film composite par coextrusion. En résumé, le producteur de films polyester cristallins ou semi-cristallins orientés épais doit concilier deux exigences contradictoires : améliorer l'adhérence des films épais à leurs revêtements finals d'application en faisant appel à des copolyesters sulfonés sans pertuber les conditions de coextrusion. Ces deux exigences n'ont pas été relevées et ne peuvent être satisfaites par l'emploi de n'importe quel copolyester sulfoné de l'art antérieur. La présente invention a précisément pour premier objet un moyen permettant d'améliorer l'adhérence des films polyester cristallins ou semi-cristallins épais à leurs revêtements finals d'application par dépôt d'un revêtement primaire d'adhérence à base d'un copolyester sulfoné par coextrusion, moyen résidant dans le choix des copolyesters sulfonés mis en oeuvre.

Un deuxième objet de la présente invention réside dans de nouveaux films polyester composites épais à adhérence améliorée obtenu par le procédé de l'invention.

Un troisième objet de la présente invention réside dans de nouveaux films polyester composites épais comportant au moins un revêtement primaire d'adhérence à base d'un copolyester sulfoné et un revêtement final d'application.

Plus spécifiquement, la présente invention a pour premier objet un procédé d'obtention de films polyester composites à adhérence améliorée vis-à-vis de revêtement finals d'application variés, constitués par un film support (A) d'un polyester cristallin ou semi-cristallin, d'épaisseur supérieure à 40 micromètres, portant sur au moins une de ses faces une couche contigüe (B) d'un revêtement primaire d'adhérence à base d'un copolyester sulfoné, par coextrusion d'un polyester cristallisable et d'un copolyester à groupes hydroxysulfonyles ou leurs sels métalliques refroidissement du composite ainsi obtenu, étirage dans au moins une direction puis thermofixation, caractérisé en ce que le copolyester sulfoné comporte au moins 80 % en moles de motifs récurrents téréphtalates rapportés au total des motifs récurrents dérivés de diacides non sulfonés et de 3 à 10 % en moles de motifs récurrents à groupes hydroxysulfonyles ou leurs sels métalliques par rapport au total des motifs récurrents de même nature.

Un deuxième objet de la présente invention réside dans de nouveaux films polyester composites orientés à adhérence améliorée vis-à-vis de leurs revêtements finals d'application, constitués par un film support (A) cristallin ou semi-cristallin, d'épaisseur supérieure à 40 micromètres comportant sur au moins une de ses faces une couche contigüe (B) d'un revêtement primaire d'adhérence à base d'un copolyester sulfoné, caractérisé en ce que le copolyester sulfoné constituant la couche (B) comporte au moins 80 % en moles de motifs récurrents téréphtalates rapportés au total des motifs récurrents dérivés de diacides non sulfonés et de 3 à 10 % en moles de motifs récurrents à groupes hydroxysulfonyles ou leurs sels métalliques par rapport au total des motifs récurrents de même nature.

Par polyester cristallisable, on désigne dans la présente demande des polyesters ou copolyesters qui, après extrusion à l'état fondu à travers une filière puis étirage du polymère amorphe, conduisent à des polyesters ou copolyesters cristallins ou semi-cristallins. La cristallinité des polymères est déterminée par les moyens usuels bien connus du spécialiste tels que la diffraction des rayons X, l'analyse thermique différentielle (cf. S.H.LIN et al J. Polymer Sci. Polymer Symposium 71 121-135 [1984]) et le test de densité.

Les polyesters cristallisables mis en oeuvre pour la préparation de la couche support (A) sont les polyesters et copolyesters utilisés habituellement pour l'obtention des films polyesters orientés par étirage et présentant, après étirage, une structure cristalline ou semi-cristalline.

A ce titre, on peut faire appel à tout polyester filmogène obtenu à partir d'un ou de plusieurs diacide(s) carboxylique(s) ou de leurs esters d'alkyle inférieur, (acide téréphtalique, acide isophtalique, acide naphtalènedicarboxylique-2,5, acide naphtalènedicarboxylique-2,6, acide naphtalènedicarboxylique-2,7, acide succinique, acide sébacique, acide adipique, acide azélaïque, acide diphényldicarboxylique et acide hexahydrotéréphtalique) et d'un ou plusieurs diols ou polyols comme l'éthylèneglycol, le propanediol-1,3, le butanediol-1,4, le néopentylglycol et le cyclohexanediméthanol-1,4, les polyoxyalkylèneglycol (polyoxyéthylèneglycol, polyoxypropylèneglycol ou leurs copolymères statistiques ou séquencés). Lorsqu'on fait appel à des copolymères, ils doivent présenter un taux suffisant du ou des composant(s) monomère(s) conférant la cristallinité. On fait appel de préférence aux homopolyesters et aux copolyesters dérivés de l'acide téréphtalique. Dans le cas des copolyesters, ces derniers comportent de préférence un taux de motifs téréphtalates représentant au moins 80 % en moles des motifs diacides et plus préférentiellement au moins 90 %. Les polyesters et copolyesters dérivés de l'éthylèneglycol et du butanediol-1,4

constituent une classe préférée de polymères utilisés pour la réalisation de la couche support (A). Avantageusement, le polyester est un polytéréphtalate d'éthylèneglycol dont la viscosité intrinsèque mesurée à 25° C dans l'o-chlorophénol est comprise entre 0,6 et 0,75 dl/g.

Comme copolyesters à groupes hydroxysulfonyles ou leurs sels métalliques constituant la couche (B), on fait appel à des copolyesters à motifs téréphtalates présentant une pluralité de groupes de formule générale:

$(-SO_3)_nM$ (I)

dans laquelle:

- n est égal à 1 ou 2
- M représente un atome d'hydrogène, un métal alcalin (sodium ou potassium par exemple), un métal alcalino-terreux (calcium, barium), un cation ammonium, un cation ammonium quaternaire.

Les copolyesters à groupes hydroxysulfonyles ou leurs sels métalliques sont des produits connus; de tels copolyesters ont été décrits notamment dans les brevets français 1.401.581 et 1.602.002 déjà cités. Ces copolyesters peuvent être obtenus par polycondensation d'au moins un ou plusieurs acides dicarboxyliques aromatiques avec au moins un ou plusieurs diols aliphatiques et au moins un composé difonctionnel comportant au moins un groupe hydroxysulfonyles ou leurs sels métalliques Les composés difonctionnels à groupe hydroxysulfonyles ou leurs sels métalliques peuvent être des diacides carboxyliques ou des diols tels que ceux cités dans le brevet français 1.602.002 ou le brevet américain n° 3.779.993. De préférence les groupes hydroxysulfonyles ou leurs sels métalliques sont liés à un radical aromatique.

Parmi les composés difonctionnels à groupes hydroxysulfonyles ou leurs sels métalliques on utilise plus préférentiellement des acides aromatiques de formule générale:

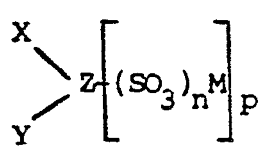

(II)

dans laquelle:

- M et n ont la signification déjà donnée;
- Z est un radical aromatique polyvalent;
- X et Y sont des radicaux hydroxycarbonyle ou dérivés: esters d'alcools aliphatiques inférieur ou halogénures d'acides (chlorure, bromure);
- p est un nombre entier égal à 1 ou 2.

Dans la formule (II), Z représente plus spécifiquement un radical phényle ou une combinaison de 2 ou plus de 2 radicaux phényles ortho ou péricondensés ou de deux ou plusieurs groupes phényles liés entre eux par des groupes inertes tels que des radicaux alcoylènes (méthylène, éthylène, propylène par exemple), alcoylidènes (propylidène) ou des groupes éther, cétone, sulfone.

Comme exemples spécifiques d'acides dicarboxyliques à groupes hydroxysulfonyles ou leurs sels métalliques, on peut citer les acides hydroxysulfonyltéréphtalique ; hydroxysulfonylisophtaliques (en particulier l'acide sulfo-5 isophtalique) ; hydroxysulfonylorthophtaliques ; hydroxysulfonyl-4 naphtalènedicarboxylique-2,7 ;
hydroxysulfonyldiphényl-dicarboxylique-4,4' ; les hydroxysulfonyl di-hydroxycarbonyl-4,4' diphénylsulfones ;
les hydroxysulfonyldihydroxycarbonyl-4,4' diphénylméthanes ;
l'acide (hydroxysulfonylphénoxy)-5 isophtalique,
l'acide (hydroxysulfonylpropoxy)-5 isophtalique. Les copolyesters sulfonés dérivés des acides hydroxysulfonylisophtaliques conviennent tout particulièrement bien à la préparation des films composites selon l'invention.

Les acides dicarboxyliques non sulfonés qui peuvent être associés à l'acide téréphtalique pour préparer les copolyesters à groupes hydroxysulfonyles ou leurs sels métalliques sont ceux habituellement utilisés pour l'obtention de polyesters. On peut citer à ce titre les acides isophtalique ; phtalique ; naphtalènedicarboxylique-2,5 ; naphtalènedicarboxylique-2,6 ; la dihydroxycarbonyl-4,4' diphénylsulfone ; le dihydroxycarbonyl-4,4' diphényléther ; les acides alcanedioïques comportant de 4 à 16 atomes de carbone tels que les acides adipique, succinique, sébacique. Ces acides peuvent être utilisé seuls ou en mélange entre eux. On fait appel, de préférence à l'acide isophtalique.

Parmi les diols utilisables pour préparer les copolyesters à groupes hydroxysulfonyles ou leurs sels métalliques on peut citer l'éthylèneglycol, le propylèneglycol, le butanediol-1,3, le butanediol-1,4, le diméthyl-2,2 propanediol-1,3, le pentanediol-1,5, l'hexanediol-1,6, le cyclohexanediméthanol, le néopentylglycol, le diétylèneglycol, les tri-, tetra-, penta- et hexaéthylèneglycol. L'éthylèneglycol et ses oligomères conviennent tout particulièrement bien. On peut les utiliser seuls ou en mélange entre eux et/ou avec d'autres diols. Les mélanges d'éthylèneglycol et de ses oligomères de poids moléculaire inférieur à 600 sont préférés. Dans ce dernier cas la teneur en oligomères de l'éthylèneglycol exprimée, en pourcentage pondéral du polyester sulfoné est de préférence au moins égale à 2 % et au plus égale à 30 %. Une proportion comprise entre 3 et 15 % en poids convient bien.

Comme indiqué ci-avant, la teneur des copolyesters sulfonés en motifs récurrents comportant des groupes hydroxysulfonyles ou leurs sels métalliques exprimée par rapport au nombre total de motifs récurrents de même nature (diacide ou diol) est comprise entre 3 et 10 %. Ainsi lorsqu'on fait appel à un acide dicarboxylique à groupes hydroxysulfonyles ou leurs sels métalliques le nombre de motifs récurrents dérivés de ce dernier représente de 3 à 10 % du nombre total des motifs récurrents dérivés des différents acides dicarboxyliques.

Parmi les copolyesters à groupes hydroxysulfonyles ou leurs sels métalliques on fait appel préférentiellement à ceux comportant dans leur chaîne une pluralité de motifs téréphtalates, oxysulfonyl-5 isophtalates, éventuellement isophtalates et une pluralité de motifs dérivés de l'éthylèneglycol et/ou de ses oligomères. On a recours avantageusement à des copolyesters dans lesquels le nombre de motifs récurrents oxysulfonyl-5 isophtalates représentent de 3 à 10 % du nombre total des motifs dérivés des acides dicarboxyliques. Lorsque les copolyesters comportent à la fois des motifs téréphtalates et isophtalates, ces derniers représentent de préférence 20 % au plus du total téréphtalate/isophtalate. Un nombre de motifs isophtalates compris entre 5 et 10 % de ce total convient bien.

Les copolyesters sulfonés décrits précédemment peuvent être obtenus par les procédés connus habituels. Ainsi il est possible de faire réagir dans un premier temps le diol ou les diols avec un ester méthylique du ou des acides carboxyliques, l'un ou l'autre groupe de réactifs comportant le composé difonctionnel à groupe(s) hydroxysulfonyle(s) ou leurs sels métalliques pour former par transestérification, en présence des catalyseurs habituels, les esters des diols correspondants puis, dans un deuxième temps, de réaliser la polycondensation de façon connue. Selon une autre méthode on peut préparer deux prépolycondensats dont l'un comprend les motifs récurrents à groupes hydroxysulfonyles ou leurs sels métalliques et les faire réagir en présence des catalyseurs usuels jusqu'à obtention d'un copolyester de poids moléculaire plus élevé. Le copolyester à groupes hydroxysulfonyles ou leurs sels métallique peut être un copolyester à blocs ou un copolyester statistique.

Les couches (A) et/ou (B) des films composites de l'invention peuvent contenir de fines particules destinées à modifier la rugosité de la surface de la couche qui les contient en leur conférant de bonnes propriétés de glissant.

Les charges présentes peuvent correspondre à de fines particules introduites dans la composition polymérique et/ou à des particules provenant de résidus catalytiques ou d'adjuvants de précipitation. Préférentiellement la rugosité est apportée par introduction de fines particules inertes dans la composition polymérique.

Les quantités de particules présentes sont telles que dans l'ensemble de la couche il y ait de 0,05 à 1 % et préférentiellement de 0,02 à 0,5 % en poids de particules. Quant au diamètre médian en volume de ces particules il est habituellement compris entre 0,1 et 5 micromètres et préférentiellement entre 0,2 et 3 micromètres.

La nature des particules inertes ajoutées peut être très variée : il peut s'agir de particules minérales (oxydes ou sels des éléments des groupes II, III et IV de la classification périodique des éléments), ou encore de particules polymériques. A titre illustratif, on peut citer parmi les charges utilisables : la silice, les silicoaluminates, le carbonate de calcium, MgO, $Al_2O_3$, $BaSO_4$, $TiO_2$. On peut évidemment faire appel à un mélange de plusieurs charges.

Selon une variante de la présente invention les couches (A) et/ou (B) peuvent contenir en outre des additifs divers, utilisés habituellement dans le domaine de l'industrie du film, tels que, par exemple, des stabilisants thermiques permettant d'assurer le recyclage du film.

Les films composites, selon la présente invention, peuvent comporter une seule couche (B) ou deux couches (B) (une couche B sur chaque face de la couche support A). Dans ce cas les couches (B) peuvent être identiques ou différentes. Les couches (B) peuvent alors se différencier l'une de l'autre par la nature des polyesters sulfonés et/ou la présence ou l'absence de charges, et/ou par le taux de charge et/ou bien encore par leur épaisseur.

Lorsque les films composites conformes à l'invention ne comporte qu'une couche (B), l'autre face de la

couche (A) peut comporter une couche (C) différente des couches (A) et (B). La couche (C) peut se distinguer de la couche (A) par la nature du polyester qui la constitue et/ou par la présence de charges dans l'une ou l'autre couche et/ou par la nature et/ou la granulométrie et/ou le taux de ces charges. On dispose alors d'un moyen commode de modifier les propriétés de surface (topographie) de la face du film composite selon l'invention opposée à celle qui porte la couche (B). On peut alors en faire varier la rugosité, le coefficient de frottement, la résistance à l'abrasion en fonction de l'utilisation finale des films.

Conformément à la présente invention les films épais à adhérence améliorée sont obtenus par coextrusion ; à cette fin on en alimente dans une première filière linéaire un polyester conduisant à un film amorphe et devenant cristallin ou semi-cristallin après avoir été soumis à un traitement d'étirage, puis à un traitement de thermofixation, alors que l'on extrude simultanément, par au moins une deuxième filière disposée parallèlement à la première et à sa proximité immédiate, le copolyester sulfoné sous forme d'au moins un deuxième film (b) déposé sur au moins une des deux faces du film amorphe (A). Le composite ainsi obtenu est ensuite refroidi de façon connue en soi, étiré pour provoquer l'orientation et la cristallisation du polyester constituant le film (A) puis thermofixé.

Les conditions d'étirage du film composite extrudé sont celles habituellement mises en oeuvre dans la fabrication des films polyesters. Ainsi, on peut procéder à un monoétirage ou à un biétirage effectué successivement ou simultanément dans deux directions en général orthogonales ou encore de séquences d'au moins 3 étirages où la direction d'étirage est changée à chaque séquence. Par ailleurs, chaque étirage monodirectionnel peut lui-même être effectué en plusieurs étapes. On pourra ainsi associer des séquences d'étirage comme par exemple deux traitements successifs de biétirage, chaque étirage pouvant être effectué en plusieurs phases.

De préférence, le film composite est soumis à un biétirage dans deux directions perpendiculaires. On peut par exemple procéder d'abord à un étirage dans la direction de déplacement du film (étirage longitudinal) puis à un étirage selon une direction perpendiculaire (étirage transversal) ou inversement. En général l'étirage longitudinal est effectué à un taux de 3 à 5 (c'est-à-dire que la longueur du film étiré représente de 3 à 5 fois la longueur du film amorphe) et à une température de 80 à 100 °C et l'étirage transversal est effectué avec un taux de 3 à 5 à une température de 90 à 120 °C.

L'étirage peut également être effectué de manière simultanée, c'est-à-dire simultanément dans le sens longitudinal et dans le sens transversal, par exemple avec un taux de 3 à 5 et à une température de 80 à 100 °C.

Selon le choix des conditions d'étirage il est possible de générer des topographies particulières de surface telles que la présence de cavités entourant une protubérance. Cette possibilité de générer des topographies particulières dépend en outre du choix du polymère et de ses adjuvants.

Les films composites de l'invention sont des films épais dont l'épaisseur est supérieure à 40 micromètres et inférieure à 300 micromètres. Dans ces films composites la couche (B) ou les couches (B) ont une épaisseur habituellement comprise entre 0,3 micromètres et 10 micromètres et préférentiellement entre 0,5 micromètres et 5 micromètres.

Les films composites de la présente invention peuvent, compte-tenu de leurs propriétés d'ancrage, être utilisés avantageusement dans de nombreux domaines où après enduction ils constitueront des films pour arts graphiques (couche de matage), des films diazoïques pour microfilm par exemple.

Les exemples suivants illustrent l'invention et montrent comment elle peut être mise en pratique. Dans ces exemples les polyesters cristallins ou cristallisables seront désignés par (a) et les copolyesters sulfonés par (b). Les tests d'adhérence suivants seront utilisés :

Chaque film composite est revêtu sur la couche (B) d'un revêtement final par couchage manuel au moyen d'un appareil de marque commerciale HAND COATER dont la barre gravée d'enduction est choisie pour déposer 6 g de composition par $m^2$ de film. Le film enduit est séché en étuve ventilée pendant 1 minute à 150 °C et stocké pendant 24 heures avant d'être soumis aux tests d'adhérence suivants.

Sur chacun des films enduits on procède à des essais d'arrachage du revêtement au moyen d'un ruban adhésif de marque commerciale MAGIC TAPE n° 810 de la Société MINNESOTA MINING MANUFACTURING. La pose du ruban est manuelle et l'arrachage se fait dans des conditions de sévérité croissante :

a) arrachage lent
b) arrachage rapide
c) arrachage avec scarification préalable du revêtement final au moyen d'une lame de rasoir.
d) arrachage avec froissage préalable du film.

Pour chaque cas, la résistance à l'arrachage est notée de 1 (arrachage total aisé) à 10 (tenue parfaite du revêtement). Enfin une note globale de 1 à 10, tenant compte des notes attribuées pour chacune des conditions a) à d) donne une évaluation générale de la résistance à l'arrachage des revêtements finals pour chacun des tests.

Les tests suivants ont été utilisés :

Test 8

On applique sur le film composite un enduit de matage pour art graphique à base d'alcool polyvinylique réticulé à chaud dans un solvant eau/alcool.

Test 10

On applique un enduit maté diazoïque à base d'acétopropionate de cellulose non réticulé en solution dans l'alcool.

Test 3

On applique sur le film composite un enduit diazoïque pour reproduction de microfilms en milieu cétonique.

Dans les exemples ci-après on fait appel aux polyester et copolyesters décrits ci-après :

1°) Polyesters cristallisables (a)

Référence (a1)

Il s'agit d'un polytéréphtalate d'éthylèneglycol contenant 3,8 % en mole de diéthylèneglycol et présentant un indice de viscosité de 740 mesurée à 25° C dans l'orthochlorophénol.

2°) Polyesters sulfonés (b)

Référence (b1)

Ce copolyester a été préparé de la façon suivante :

Selon les procédés connus on prépare tout d'abord un prépolycondensat par réaction entre l'acide isophtalique, l'acide sulfo-5 isophtalique et l'éthylèneglycol en présence d'acétate de sodium utilisé comme catalyseur ; l'estérification est effectuée sous pression atmosphérique jusqu'à 220° C puis prépolymérisation jusqu'à 240° C.

On prépare également un autre prépolycondensat à partir de téréphtalate de diméthyle et d'éthylène glycol en présence d'acétate de manganèse ; l'interéchange est poursuivi sous pression atmosphérique jusqu'à 225° C. Après addition d'un stabilisant phosphoré et de trioxyde d'antimoine ce prépolycondensat est mélangé avec le prépolycondensat décrit dans le paragraphe précédent; le mélange est chauffé jusqu'à 275° la pression étant progressivement réduite jusqu'à 66 Pascal.

Le copolyester obtenue est ensuite coulé et granulé. Il présente les caractéristiques suivantes :

- teneur en acide isophtalique dans le mélange acide téréphtalique (AT)/acide isophtalique (AI) en moles % : 15.
- taux d'acide sulfo-5 isophtalique (ASI) en moles pour 100 moles de diacides aromatiques non sulfonés (AT / AI) : 3,5 %
- teneur pondérale en diéthylèneglycol (DEG) : 9 %

Référence (b2) à (b5)

En opérant comme précédemment on a préparé divers copolyesters sulfonés à motifs récurrents AT/AI/ASI/éthylèneglycol/oligomères de l'éthylèneglycol présentant les caractéritiques suivantes :

| Référence copolyester sulfoné | AT % en moles | AI % en moles | ASI % en moles | DEG % en poids |
|---|---|---|---|---|
| b2 | 90 | 10 | 7 | 4,1 |
| b3 | 95 | 5 | 3,5 | 1,7 |
| b4 | 40 | 60 | 14 | 14 |
| b5 | 100 | 0 | 14 | 14 |

Les films composites sont préparés par coextrusion d'un film de polyester (a) et du copolyester (b). La ligne principale d'extrusion de la couche (A) travaille à 275° C et la ligne satellite d'extrusion de la couche (B) à température inférieure à 275° C.

Avant extrusion les copolyesters (b) sont étuvés sous air déshydraté, puis conservés et alimentés sous atmosphère d'un gaz inerte, dans l'extrudeuse à vis de la ligne satellite d'extrusion.

Exemple 1

On prépare un film composite F1 biétiré comportant trois couches B/A/B par coextrusion d'une part du polytéréphtalate (a1) décrit précédemment et du copolyester sulfoné (b1). Les couches (B) situées de part et d'autre de la couche (A) sont identiques et ont une épaisseur de 1,5 micromètre. L'épaisseur totale du film F1 est de 50 micromètre. On l'a soumis aux tests d'adhérence décrits ci-avant. Les résultats suivants ont été obtenus :

Test 3 : cotation globale : 10
Test 8 : cotation globale : 10
Test 10 : cotation globale : 8

Exemple 2 à 3

En opérant comme à l'exemple 1, on a préparé deux films F2 et F3 composites de 50 micromètres d'épaisseurs après avoir remplacé, toutes choses étant égales par ailleurs le copolyester sulfoné (b1) par les copolyesters (b2) et (b3). Les résultats suivants ont été obtenus aux tests d'adhérence :

| Référence Films | Test 3 | Test 8 | Test 10 |
|---|---|---|---|
| F2 | 10 | 9 | 10 |
| F3 | - | 10 | 3 |

A titre comparatif on a tenté de fabriquer des films composites par extrusion du polyester a1 et des copolyesters b3 et b4 non conformes à l'invention. Les films n'ont pu être obtenus.

**Revendications**

1. Procédé d'obtention de films polyester composites à adhérence améliorée vis-à-vis de revêtement finals d'application variés, constitués par un film support (A) d'un polyester cristallin ou semi-cristallin, d'épaisseur supérieure à 40 micromètres, portant sur au moins une de ses faces une couche contigüe (B) d'un revêtement primaire d'adhérence à base d'un copolyester sulfoné, par coextrusion d'un polyester cristallisable et d'un copolyester à groupes hydroxysulfonyles ou leurs sels métalliques, refroidissement du composite ainsi obtenu, étirage dans au moins une direction puis thermofixation, caractérisé en ce que le copolyester sulfoné comporte au moins 80 % en moles de motifs récurrents téréphtalates rapportés au total des motifs récurrents dérivés de diacides non sulfonés et de 3 à 10 % en moles de motifs récurrents à groupes hydroxysulfonyles ou leurs sels métalliques par rapport au total des motifs récurrents de même nature.

2. Procédé selon la revendication 1, caractérisé en ce que le polyester cristallisable utilisé pour former la couche (A) est un homopolyester ou un copolyester de l'acide téréphtalique comportant au moins 80 % en moles de motifs téréphtalates.

3. Procédé selon la revendication 2, caractérisé en ce que le polyester cristallisable utilisé pour former la couche (A) est le polytéréphtalate d'éthylèneglycol.

4. Procédé selon l'une quelconque des revendications 1 à 3, caractérisé en ce que le copolyester sulfoné utilisé comme constituant de la couche (B) présente une pluralité de groupes hydroxysulfonyles ou leurs sels métalliques de formule générale :

$(-SO_3)_nM$ (I)

dans laquelle :
- n est égal à 1 ou 2
- M représente un atome d'hydrogène, un métal alcalin, un métal alcalino-terreux, un cation ammonium, un cation ammonium quaternaire.

5. Procédé selon l'une quelconque des revendications 1 à 4, caractérisé en ce que le copolyester sulfoné présente une pluralité de motifs dérivés de diacides aromatiques ou leurs dérivés de formule :

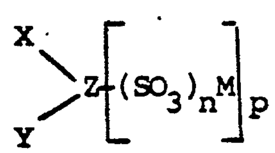

(II)

dans laquelle :
- n est égal à 1 ou 2 .
- M représente un atome d'hydrogène, un métal alcalin, un métal alcalino-terreux, un cation ammonium, un cation ammonium quaternaire ;
- Z est un radical aromatique polyvalent ;
- X et Y sont des radicaux hydroxycarbonyle ou dérivés : esters d'alcools aliphatiques inférieur ou halogénures d'acides (chlorure, bromure) ;
- p est un nombre entier égal à 1 ou 2.

6. Procédé selon l'une quelconque des revendications 1 à 5, caractérisé en ce que le copolyester sulfoné présente une pluralité de motifs dérivés d'un acide hydroxysulfonylisophtalique.

7. Procédé selon la revendication 6, caractérisé en ce que le copolyester sulfoné présente une pluralité de motifs dérivés de l'acide isophtalique.

8. Procédé selon la revendication 7, caractérisé en ce que dans le copolyester sulfoné, le nombre de motifs dérivés de l'acide isophtalique représente jusqu'à 20 % du total des motifs téréphtalate/isophtalate.

9. Procédé selon l'une quelconque des revendications 1 à 8, caractérisé en ce que le copolyester sulfoné

présente une pluralité de motifs dérivés de l'éthylèneglycol et/ou de ses oligomères de poids moléculaire inférieur à 600.

10. Procédé selon la revendication 9, caractérisé en ce que la teneur pondérale du copolyester sulfoné en motifs dérivés des oligomères de l'éthylèneglycol est comprise entre 2 et 30 %.

11. Films polyester composites orientés à adhérence améliorée vis-à-vis de leurs revêtements finals d'application, constitués par un film support (A) cristallin ou semi-cristallin, d'épaisseur supérieure à 40 micromètres comportant sur au moins une de ses faces une couche contigüe (B) d'un revêtement primaire d'adhérence à base d'un copolyester sulfoné, caractérisé en ce que le copolyester sulfoné constituant la couche (B) comporte au moins 80 % en moles de motifs récurrents téréphtalates rapportés au total des motifs récurrents dérivés de diacides non sulfonés et de 3 à 10 % en moles de motifs récurrents à groupes hydroxysulfonyles ou leurs sels métalliques par rapport au total des motifs récurrents de même nature.

12. Films polyester composites orientés, à adhérence améliorée vis-à-vis de revêtements finals d'application variés, selon la revendication 11, caractérisés en ce que l'épaisseur de la ou des couche(s) (B) est comprise dans un intervalle de 0,3 à 10 micromètres.

13. Films composites complexes constitués par un film polyester orienté cristallin ou semi-cristallin support (A) d'épaisseur supérieure à 40 micromètres, comportant sur au moins une de ses faces un revêtement d'application déposé sur une couche (B) d'un revêtement primaire d'adhérence à base d'un copolyester sulfoné, caractérisé en ce que la couche (B) est constituée par un copolyester sulfoné selon l'une quelconque des revendications 1 à 10.

14. Films composites complexes constitués par un film polyester orienté cristallin ou semi-cristallin support (A) d'épaisseur supérieure à 40 micromètres, comportant sur au moins une de ses faces un revêtement d'application selon la revendication 13, caractérisé en ce que le revêtement d'application est un revêtement de matage.

15. Films composites complexes constitués par un film polyester orienté cristallin ou semi-cristallin support (A) d'épaisseur supérieure à 40 micromètres, comportant sur au moins une de ses faces un revêtement d'application selon la revendication 13, caractérisé en ce que le revêtement d'application est un revêtement diazoïque.

## Claims

1. Process for the production of composite polyester films having improved adhesiveness towards various final application coatings, consisting of a crystalline or semicrystalline polyester support film (A) of thickness greater than 40 micrometres, carrying on at least one of its surfaces a contiguous layer (B) of a sulphonated copolyester-based adhesion primer coating, by the co-extrusion of a crystallisable polyester and of a copolyester containing hydroxylsulphonyl groups or their metal salts, cooling of the composite thus obtained, drawing at least in one direction and then heat-setting, characterised in that the sulphonated copolyester contains at least 80 mol% of terephthalate recurring units relative to the total of the recurring units derived from non-sulphonated diacids and from 3 to 10 mol% of recurring units containing hydroxylsulphonyl groups or their metal salts, relative to the total of the recurring units of the same nature.

2. Process according to Claim 1, characterised in that the crystallisable polyester employed to prepare layer (A) is a homopolyester or a copolyester of terephthalic acid containing at least 80 mol% of terephthalate units.

3. Process according to Claim 2, characterised in that the crystallisable polyester employed to prepare layer (A) is ethylene glycol polyterephthalate.

4. Process according to any one of Claims 1 to 3, characterised in that the sulphonated copolyester employed as constituent of layer (B) has a plurality of hydroxysulphonyl groups or their metal salts of general formula:

$(-SO_3)_nM$ (I)

in which:
n is equal to 1 or 2
M represents a hydrogen atom, an alkali metal, an alkaline earth metal, an ammonium cation or a quaternary ammonium cation.

5. Process according to any one of Claims 1 to 4, characterised in that the sulphonated copolyester has a plurality of units derived from aromatic diacids or their derivatives of formula:

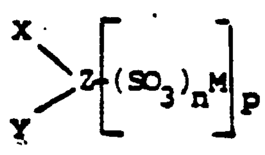

(II)

in which:
n is equal to 1 or 2;
M represents a hydrogen atom, an alkali metal, an alkaline earth metal, an ammonium cation or a quaternary ammonium cation;
Z is a polyvalent aromatic radical;
X and Y are hydroxycarbonyl radicals or derivatives: lower aliphatic alcohol esters or acid halides (chloride or bromide); and
p is an integer equal to 1 or 2.

6. Process according to any one of Claims 1 to 5, characterised in that the sulphonated copolyester has a plurality of units derived from a hydroxysulphonylisophthalic acid.

7. Process according to Claim 6, characterised in that the sulphonated copolyester has a plurality of units derived from isophthalic acid.

8. Process according to Claim 7, characterised in that in the sulphonated copolyester, the number of units derived from isophthalic acid represents up to 20% of the total of the terephthalate/isophthalate units.

9. Process according to any one of Claims 1 to 8, characterised in that the sulphonated copolyester has a plurality of units derived from ethylene glycol and/or its oligomers having a molecular weight less than 600.

10. Process according to Claim 9, characterised in that the content by weight of units derived from ethylene glycol oligomers in the sulphonated copolyester is between 2 and 30%.

11. Oriented composite polyester films having improved adhesiveness towards their final application coatings, consisting of a crystalline or semicrystalline support film (A) of thickness greater than 40 micrometres, containing on at least one of its surfaces a contiguous layer (B) of a sulphonated copolyester-based adhesion primer coating, characterised in that the sulphonated copolyester forming the layer (B) contains at least 80 mol% of terephthalate recurring units relative to the total of the recurring units derived from non-sulphonated diacids and from 3 to 10 mol% of recurring units containing hydroxysulphonyl groups or their metal salts, relative to the total of the recurring units of the same nature.

12. Oriented composite polyester films having improved adhesiveness towards varied final application coatings, according to Claim 11, characterised in that the thickness of the layer(s) (B) is within the range from 0.3 to 10 micrometres.

13. Complex composite films consisting of a crystalline or semicrystalline oriented polyester support film (A) of thickness grater than 40 micrometres, containing on at least one of its surfaces an application

coating deposited on a layer (B) of a sulphonated copolyester-based adhesion primer coating, characterised in that the layer (B) consists of a sulphonated copolyester according to any one of Claims 1 to 10.

**14.** Complex composite films consisting of a crystalline or semicrystalline oriented polyester support film (A) of thickness greater than 40 micrometres, containing on at least one of its surfaces an application coating according to Claim 13, characterised in that the application coating is a matt coating.

**15.** Complex composite films consisting of a crystalline or semicrystalline oriented polyester film support (A) of thickness grater than 40 micrometres, containing on at least one of its surfaces an application coating according to Claim 13, characterised in that in that the application coating is a diazo coating.

**Ansprüche**

**1.** Verfahren zur Herstellung von zusammengesetzten bzw. Verbund-Polyesterfilmen mit verbesserter Haftung gegenüber verschiedenen Endanwendungsüberzügen, bestehend aus einem Trägerfilm (A) eines kristallinen oder halbkristallinen Polyesters mit einer Dicke über 40 Mikrometer, der auf mindestens einer seiner Seiten eine angrenzende Schicht (B) eines Haftgrundierungsüberzugs auf Basis eines sulfonierten Copolyesters trägt, durch Coextrudieren eines kristallisierbaren Polyesters und eines Copolyesters mit Hydroxysulfonylgruppen oder deren Metallsalzen, Abkühlen des so erhaltenen Verbunds, Verstrecken in wenigstens einer Richtung und dann Thermofixierung, dadurch **gekennzeichnet,** daß der sulfonierte Copolyester mindestens 80 Mol-% wiederkehrende Terephthalat-Einheiten trägt, bezogen auf die Gesamtheit der wiederkehrenden Einheiten, stammend von den nicht-sulfonierten Disäuren, und 3 bis 10 Mol-% wiederkehrende Einheiten mit Hydroxysulfonylgruppen oder deren Metallsalzen in bezug auf die Gesamtheit der wiederkehrenden Einheiten gleicher Natur.

**2.** Verfahren gemäß Anspruch 1, dadurch gekennzeichnet, daß der kristallisierbare Polyester, der zur Bildung der Schicht (A) verwendet wird, ein Homopolyester oder ein Copolyester der Terephthalsäure ist mit mindestens 80 Mol-% Terephthalat-Einheiten.

**3.** Verfahren gemäß Anspruch 2, dadurch gekennzeichnet, daß der kristallisierbare Polyester, der zur Bildung der Schicht (A) verwendet wird, das Polyethylenglykolterephthalat ist.

**4.** Verfahren gemäß einem der Ansprüche 1 bis 3, dadurch gekennzeichnet, daß der als Bestandteil der Schicht (B) verwendete, sulfonierte Copolyester eine Vielzahl von Hydroxysulfonylgruppen oder deren Metallsalzen aufweist der allgemeinen Formel

$$(-SO_3)_nM \qquad (I)$$

worin:
n = 1 oder 2
M ein Wasserstoffatom, ein Alkalimetall, ein Erdalkalimetall, ein Ammoniumkation, ein quaternäres Ammoniumkation bedeutet.

**5.** Verfahren gemäß einem der Ansprüche 1 bis 4, dadurch gekennzeichnet, daß der sulfonierte Copolyester eine Vielzahl von Einheiten, abgeleitet von aromatischen Disäuren oder deren Derivaten der Formel

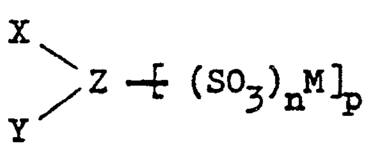

(II)

aufweist, worin:

n = 1 oder 2;
M ein Wasserstoffatom, ein Alkalimetall, ein Erdalkalimetall, ein Ammoniumkation, ein quaternäres Ammoniumkation bedeutet;
Z ein mehrwertiger aromatischer Rest ist;
X und Y Hydroxycarbonylreste oder Derivate: Ester niedriger, aliphatischer Alkohole oder Säurehalogenide (Chlorid, Bromid) sind;
p eine ganze Zahl von 1 oder 2 ist.

**6.** Verfahren gemäß einem der Ansprüche 1 bis 5, dadurch gekennzeichnet, daß der sulfonierte Copolyester eine Vielzahl von Einheiten, abgeleitet von einer Hydroxysulfonylisophthalsäure, aufweist.

**7.** Verfahren gemäß Anspruch 6, dadurch gekennzeichnet, daß der sulfonierte Copolyester eine Vielzahl von Einheiten, abgeleitet von der Isophthalsäure,aufweist.

**8.** Verfahren gemäß Anspruch 7, dadurch gekennzeichnet, daß in dem sulfonierten Copolyester die Anzahl der Einheiten, abgeleitet von der Isophthalsäure, bis zu 20% der Gesamtheit der Einheiten Terephthalat/Isophthalat darstellt.

**9.** Verfahren gemäß einem der Ansprüche 1 bis 8, dadurch gekennzeichnet, daß der sulfonierte Copolyester eine Vielzahl von Einheiten, abgeleitet von Ethylenglykol und/oder seinen Oligomeren, mit einem Molekulargewicht unterhalb 600 aufweist.

**10.** Verfahren gemäß Anspruch 9, dadurch gekennzeichnet, daß der Gewichtsgehalt des sulfonierten Copolyesters an Einheiten, abgeleitet von Oligomeren des Ethylenglykols, zwischen 2 und 30% beträgt.

**11.** Orientierte Verbundpolyesterfilme mit verbesserter Haftung gegenüber ihren Endanwendungsüberzügen, bestehend aus einem kristallinen oder halb-kristallinen Trägerfilm (A) mit einer Dicke über 40 Mikrometer, der auf wenigstens einer seiner Seiten eine angrenzende Schicht (B) eines Haftgrundierungsüberzugs auf Basis eines sulfonierten Copolyesters tragt, dadurch gekennzeichnet, daß der sulfonierte Copolyester, welcher die Schicht (B) bildet, mindestens 80 Mol-% wiederkehrende Terephthalat-Einheiten in bezug auf die Gesamtheit der wiederkehrenden Einheiten, abgeleitet von nicht-sulfonierten Disäuren, trägt und von 3 bis 10 Mol-% wiederkehrende Einheiten mit Hydroxysulfonylgruppen oder ihren Metallsalzen in bezug auf die Gesamtheit der wiederkehrenden Einheiten der gleichen Natur trägt.

**12.** Orientierte Verbundpolyesterfilme mit verbesserter Haftung gegenüber verschiedenen Endanwendungsüberzügen gemäß Anspruch 11, dadurch gekennzeichnet, daß die Dicke der Schicht(en) (B) in einem Bereich von 0,3 bis 10 Mikrometer liegt.

**13.** Komplexe Verbundfilme, bestehend aus einem orientierten, kristallinen oder halb-kristallinen Polyesterfilmträger (A) mit einer Dicke über 40 Mikrometer, der auf mindestens einer seiner Seiten einen Anwendungsüberzug trägt, der auf einer Schicht (B) eines Haftgrundierungsüberzugs auf Basis eines sulfonierten Copolyesters abgelagert ist, dadurch gekennzeichnet, daß die Schicht (B) aus einem sulfonierten Copolyester gemäß einem der Ansprüche 1 bis 10 besteht.

**14.** Komplexe Verbundfilme, bestehend aus einem kristallinen oder halb-kristallinen, orientierten Polyesterfilmträger (A) mit einer Dicke oberhalb 40 Mikrometer, der auf wenigstens einer seiner Seiten einen Anwendungsüberzug gemäß Anspruch 13 trägt, dadurch gekennzeichnet, daß der Anwendungsüberzug ein Mattierungsüberzug ist.

**15.** Komplexe Verbundfilme, bestehend aus einem orientierten, kristallinen oder halb-kristallinen Polyesterfilmträger (A) mit einer Dicke über 40 Mikrometer, der auf mindestens einer seiner Seiten einen Anwendungsüberzug gemäß Anspruch 13 trägt, dadurch gekennzeichnet, daß der Anwendungsüberzug ein Diazoüberzug ist.